(19) Europäisches Patentamt

European Patent Office

Office européen des brevets

(11) EP 3 499 204 A1

(12) **EUROPEAN PATENT APPLICATION**

(43) Date of publication:
19.06.2019 Bulletin 2019/25

(21) Application number: 17207195.3

(22) Date of filing: 14.12.2017

(51) Int Cl.:
G01M 1/12 (2006.01)        A47J 37/00 (2006.01)
F24C 7/00 (2006.01)        G01G 1/00 (2006.01)
G01L 1/14 (2006.01)        G01L 1/22 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicant: Koninklijke Philips N.V.
5656 AE Eindhoven (NL)

(72) Inventors:
• STARMANS, Franciscus Jozef Marie
5656 AE Eindhoven (NL)
• LINZ, Sascha
5656 AE Eindhoven (NL)

(74) Representative: de Haan, Poul Erik et al
Philips International B.V.
Philips Intellectual Property & Standards
High Tech Campus 5
5656 AE Eindhoven (NL)

(54) **AN APPARATUS FOR DETERMINING A FORCE APPLIED THERETO**

(57) There is provided an apparatus (10) for determining a force applied thereto. The apparatus (10) comprises: a load sensor (110) configured to measure the force and output an electrical signal indicative of the force, and an electronic unit (120) adjacent to the load sensor (110) wherein electronic unit (120) comprises: a temperature sensor (122) configured to measure a temperature of the load sensor; and a processor (124) configured to determine a compensated output signal based on the measured temperature and the electrical signal.

Fig. 3A

EP 3 499 204 A1

**Description**

FIELD OF THE INVENTION

The present invention relates to an apparatus for determining a force applied thereto. Specifically, the present invention relates to an apparatus for determining a force applied thereto that can be integrated in a household appliance, such as an air fryer or a rice cooker, so as to allow accurate measurements of force at the household appliance.

BACKGROUND OF THE INVENTION

There are many household appliances which require weight or force measurements. For example, sometimes it may be important to measure a weight of foodstuff contained inside a blender in order to ensure that the blender is within its operating limits.

In most cases, the amount of measured strain (i.e. linear deformation or change in length of any particular linear dimension of a solid body) is indicative of the amount of force applied. Therefore, one of the cost-efficient ways of adding a weighing functionality to a household appliance is to supply each foot of the appliance with a strain gauge load sensor and evaluate the changes in electrical resistance in a Wheatstone bridge circuit. Typically, in these arrangements, four strain gauges are connected in the Wheatstone bridge circuit so as to reject non-load force effects (i.e. virtual forces due to uniform temperature changes). The output of the Wheatstone bridge circuit is directly related to the total load at all of the feet of the household appliance.

SUMMARY OF THE INVENTION

A type of strain gauge load sensor employed in currently known weighing apparatuses generally comprises strain inducing element for generating strain in response to an applied load, a wiring sheet, and strain gauges fixedly bonded to the strain inducing element and having lead lines soldered to lines forming the sheet to form a bridge circuit for detection of the strain. The strain inducing element tends to deform with a change in temperature. Therefore, it is important to take into account the pattern of distribution of temperature in the inducing element when determining a force applied to the strain gauge load sensor, particularly when the load sensor is employed in household appliances where large temperature changes can occur. As an example, if an object to be weighted has a non-uniform temperature distribution, the temperature distribution of the object may be transmitted to the strain inducing element by conduction which causes the temperature at least one of the strain gauges in the appliance to be different from those of other strain gauges and thereby creating a temperature gradient between the strain gauges. When the temperature-dependent coefficient of resistance of the strain gauges is not zero, a change in resistance corresponding to the temperature gradient develops between the strain gauges and cause unwanted noise in the output signal. This type of temperature gradient usually occurs in cooking appliances. For example, for an air fryer where the doneness of the processed food is monitored by its weight, erroneous measurements may occur if there is a large temperature change over the total measurement time. The same problem may occur for other cooking appliances such as a rice cooker with a steamer. Moreover, the Young's modulus of elasticity of the strain inducing element increases with a decrease in temperature, which may potentially lead to errors in the weighing results if not considered during the measurement of strain.

Hence, in currently known devices with weighing functionality there are high requirements for thermal isolation for the load sensor as well as the connecting leads and analog electronics. In some other known implementations, other types of load sensors such as capacitive load sensors or piezo-electric load sensors are used. These types of load sensors are also prone to errors due to changes in temperature and/or humidity in their surroundings.

Accordingly, it would be advantageous to provide a compact apparatus for determining a force applied thereto that can accurately compensate for errors caused by a difference in temperature at the apparatus while circumventing the need for high thermal isolation and minimizing costs and efforts required to manufacture the apparatus.

According to the aspects and embodiments described above, the limitations of existing apparatuses and methods are addressed.

According to a first aspect, there is provided an apparatus for determining a force applied thereto, the apparatus comprising: a load sensor configured to measure the force and output an electrical signal indicative of the force, and an electronic unit adjacent to the load sensor, wherein electronic unit comprises: a temperature sensor configured to measure a temperature of the load sensor; and a processor configured to determine a compensated output signal based on the measured temperature and the electrical signal.

In some embodiments, the electronic unit may be attached to the load sensor.

In some embodiments, the load sensor may comprise a flexible printed circuit substrate, and the electronic unit is fixedly attached to the flexible printed circuit substrate.

In some embodiments, the flexible printed circuit substrate of the load sensor may comprise a connecting unit.

In these embodiments, the flexible printed circuit substrate may be elongated so as to allow connection between the connecting unit and a main control unit.

In some embodiments, the electronic unit further may comprise a converting unit configured to digitize the electrical signal from the load sensor.

In some embodiments, the load sensor may be a strain gauge load sensor, and the processor may be configured to determine the compensated output signal based on the digitized electrical signal and a force-temperature-calibration curve associated with the strain gauge load sensor.

According to a second aspect, there is provided a system comprising two or more apparatuses according to the first aspect and a main control unit configured to receive a respective compensated output signal from each of the two or more apparatuses. Each of the apparatuses may be integrated at a respective predetermined position such that the main control unit is configured to determine a center of gravity of the system based on the received compensated output signals and the predetermined positions of the two or more apparatuses.

According to a third aspect, there is provided a cooking device comprising a system according to the second aspect. The main control unit may be further configured to determine a change in status of the cooking device based on a change of center of gravity of the system.

According to a fourth aspect, there is provided a method of determining a force applied to an apparatus, the apparatus comprising a load sensor and an electronic unit adjacent to the load sensor, the method comprising: measuring, via the load sensor, the force applied to the apparatus; outputting, via the load sensor, an electrical signal indicative of the force; measuring, via a temperature sensor in the electronic unit, a temperature of the load sensor; and determining, via a processor in the electronic unit, a compensated output signal based on the measured temperature and the electrical signal.

These and other aspects of the invention will be apparent from and elucidated with reference to the embodiment(s) described hereinafter.

## BRIEF DESCRIPTION OF THE DRAWINGS

For a better understanding of the embodiments, and to show more clearly how they may be carried into effect, reference will now be made, by way of example only, to the accompanying drawings, in which:

Fig. 1 is a block diagram of an apparatus for determining a force applied thereto, according to an embodiment;
Fig. 2 is a block diagram of a system according to an embodiment;
Fig. 3A is a top view schematic diagram of an apparatus for determining a force applied thereto, according to an embodiment;
Fig. 3B is a side view schematic diagram of the apparatus of Fig. 3A;
Fig. 4 is a flow chart illustrating an exemplary method of determining a force applied to an apparatus according to an embodiment;
Fig. 5A is a schematic diagram illustrating how a center of gravity in a system comprising four apparatuses can be determined;
Fig. 5B is a schematic diagram illustrating how a load applied to a system comprising three apparatuses can be determined; and
Fig. 5C is a schematic diagram illustrating how a load applied to a system comprising two apparatuses can be determined.

## DETAILED DESCRIPTION OF EMBODIMENTS

As noted above, there is provided an improved apparatus and a method of operating the same which addresses the existing problems.

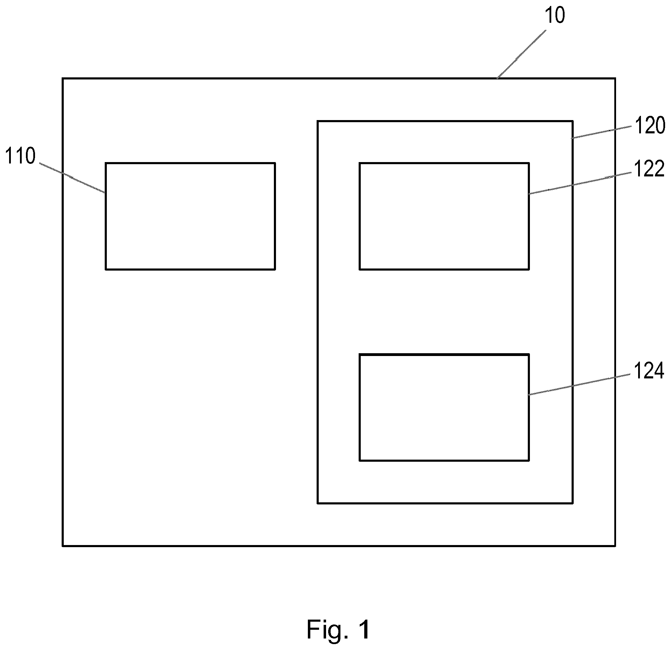

Fig. 1 shows a block diagram of an apparatus 10 for determining the force applied thereto, according to an embodiment. In some embodiments, the apparatus 10 may be integrated in any household appliance that requires weight or force detection, in particular in those where a change in temperature can occur, such as a blender, a food processor, an air fryer, a microwave oven, a steamer, a kettle, a slow cooker, a bread making device, etc. Specifically, in some embodiments, one or more apparatuses 10 may be integrated in a base unit or at least one of the feet of a household appliance such as a cooking device.

With reference to Fig. 1, the apparatus 10 comprises a load sensor 110 and an electronic unit 120. The load sensor 110 is configured to measure the force applied to the apparatus 10 and output an electrical signal indicative of the force. In some embodiments, the load sensor 110 may be a strain gauge load sensor. In other embodiments, the load sensor 110 may be other types of load sensors that provide an electrical signal indicative of the applied force may be used, such as a capacitive load sensor or a piezo-electric load sensor.

The electronic unit 120 is adjacent to the load sensor 110 and comprises a temperature sensor 122 and a processor 124. In some embodiments, the electronic unit 120 may be attached to the load sensor 110, for example by means of gluing or soldering. In some embodiments, the load sensor 110 may comprise a flexible printed circuit substrate, and in these embodiment the electronic unit 120 may be fixedly attached to the flexible printed circuit substrate of the load sensor 110. Therefore, in these embodiments, no additional (flexible) printed circuit substrate and/or further soldering or bonding procedures are required for accommodating the different components of the apparatus 10, therefore saving manufacturing costs.

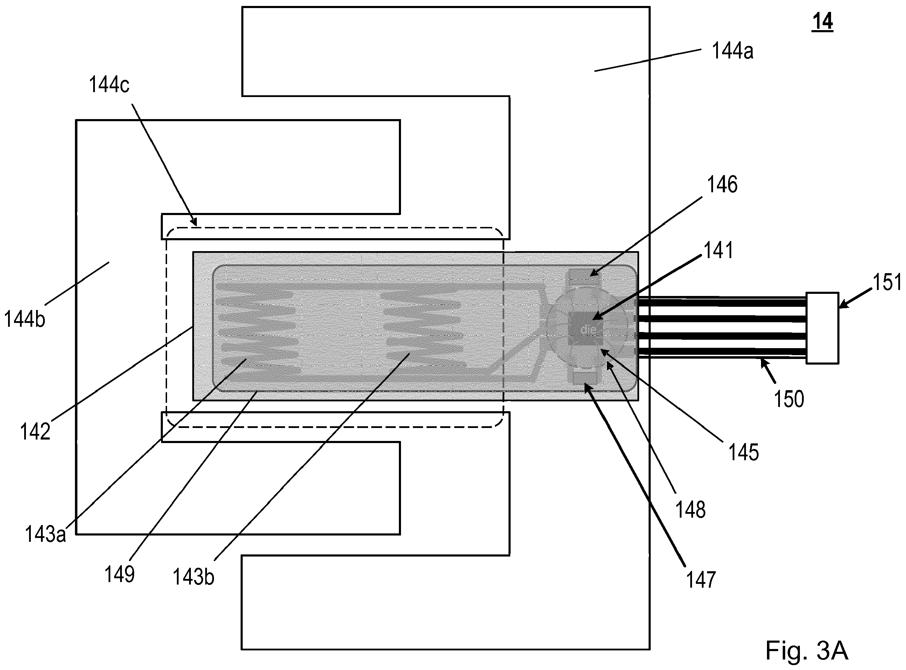

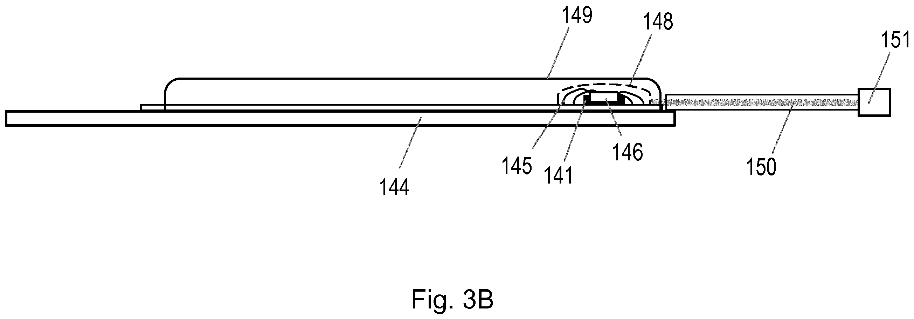

Furthermore, in some embodiments, the flexible printed circuit substrate may comprise a connecting unit (e.g. contact leads) so as to act as a flexible connector to allow power to be supplied to the electronic unit 120. However, in some other embodiments, a separate cable may be provided at the apparatus 10 for this purpose. This will be illustrated in the embodiment with reference to Fig. 3A and Fig. 3B.

The temperature sensor 122 is configured to measure a temperature of the load sensor 110. Due to the proximity between the temperature sensor 122 of the electronic unit 120 and the load sensor 110, errors caused by a difference in temperature between the load sensor 110 and the temperature measured by the temperature sensor 122 can be minimized. In addition, since the temperature sensor 122 of the electronic unit 120 in some embodiments may not be in direct contact with the load sensor 110, even though the electronic unit 120 is adjacent to the load sensor 110, the temperature sensor 122 in these embodiments may be configured to measure the temperature of the load sensor 110 by compensating for errors caused by ambient temperature. This ambient temperature may be an approximated temperature of the ambient surroundings of the load sensor 110 and/or the temperature sensor 122 which is taken into account of when preprogramming the temperature sensor 122. However, in some embodiments where the temperature sensor 122 is not configured to measure the temperature of the load sensor 110 by compensating for errors caused by ambient temperature, the errors caused by ambient temperature may be corrected in a later stage by the processor 124 of the electronic unit 120.

In some embodiments, the electronic unit 120 may further comprise a converting unit configured to digitize the electrical signal from the load sensor 110. Therefore, in these embodiments the electronic unit 120 has an integrated conversion (digitization) functionality. The converting unit may be an A/D converter configured to perform analog-to-digital conversion on the electrical signal from the load sensor 110. Since the electronic unit 120 is adjacent to the load sensor 110, error caused by noise in the circuitry is minimized. In most cases, once the electrical signal from the load sensor 110 has been digitized, the digitized signal becomes immune to physical noise in the circuitry. Although in some embodiments the electronic unit 120 may comprise a converting unit, in other embodiments, the apparatus 10 may comprise a converting unit separate from but electrically connected to the electronic unit 120.

The processor 124 of the electronic unit 120 is configured to determine a compensated output signal based on the measured temperature and the electrical signal. Specifically, the processor 124 is configured to perform correction/compensation processing on the electrical signal from the load sensor 110 so as to eliminate errors caused by a change in temperature, based on the measured temperature by the temperature sensor 122. Specifically, in some embodiments, the processor 124 may be configured to perform linear or non-linear correction/compensation based on the measured temperature as well as the measured force value by the load sensor 110.

As mentioned above, in some embodiments the load sensor 110 may be a strain gauge load sensor and the apparatus 10 may further comprise a converting unit configured to digitize the electrical signal from the load sensor 110. In these embodiments, the processor 124 may be configured to determine the compensated output signal based on the digitized electrical signal from the converting unit and a force-temperature-calibration curve associated with the strain gauge load sensor so as to compensate for errors caused by a change in temperature at the apparatus 10. Since there are many variations in the size, material, and sensitivity of the strain gauge(s) used in a strain gauge load sensor, the force-temperature-calibration curve associated with the strain gauge load sensor may be obtained from the manufacturer of the strain gauge load sensor or by performing force measurements at different temperatures using the strain gauge load sensor. In some cases, the sensitivity of the strain gauge(s) of the load sensor may be determined by obtaining measurements using a large number of strain gauges and extracting an average correction for the strain gauges. In other cases, the sensitivity may be determined for a specific strain gauge by means of experimentation and/or calibration. The force-temperature-calibration curve maybe at least dependent on the sensitivity of the strain gauge(s) in the strain gauge load sensor and/or properties of the substrate material of the strain inducing element in the strain gauge load sensor.

Since the processor 124 is capable of determining a compensate output signal based on the measured temperature of the load sensor 110, when the apparatus 10 is implemented in a system or a device no further calibration is required.

The processor 124 can be implemented in a numerous ways, with software and/or hardware, to perform the various functions described therein. The processor 124 may one or more microprocessors or digital signal processors (DSPs) that may be programmed using software or computer program code to perform the required functions and/or to control components of the processor 124 to effect the required functions. The processor 124 may be implemented as a combination of dedicated hardware to perform some functions (e.g. amplifiers, pre-amplifiers, analog-to-digital convertors (ADCs) and/or digital-to-analog convertors (DACs) and a processor (e.g., one or more programmed microprocessors, controllers, DSPs and associated circuitry) to perform other functions. Examples of components that may be employed in various embodiments of the present disclosure include, but are not limited to, conventional microprocessors, DSPs, application specific integrated circuits (ASICs), and field-programmable gate arrays (FPGAs).

In various implementations, the processor 124 may be associated with or comprise one or more memory units that comprise any type of memory, such as cache or system memory including volatile and non-volatile computer memory such as random access memory (RAM) static RAM (SRAM), dynamic RAM (DRAM), read-only memory (ROM), programmable ROM (PROM), erasable PROM (EPROM), and electrically erasable PROM (EEPROM). The processor 124 or associated memory unit can also be used for storing program code that can be executed by a processor in the processor 124 to perform the method described herein. In some embodiments, the memory unit can store template messages or content for messages that can be used when generating messages according to the method described below.

It will be appreciated that Fig. 1 only shows the components required to illustrate an aspect of the apparatus 10, and in a practical implementation, the apparatus 10 may comprise alternative or additional components to those shown.

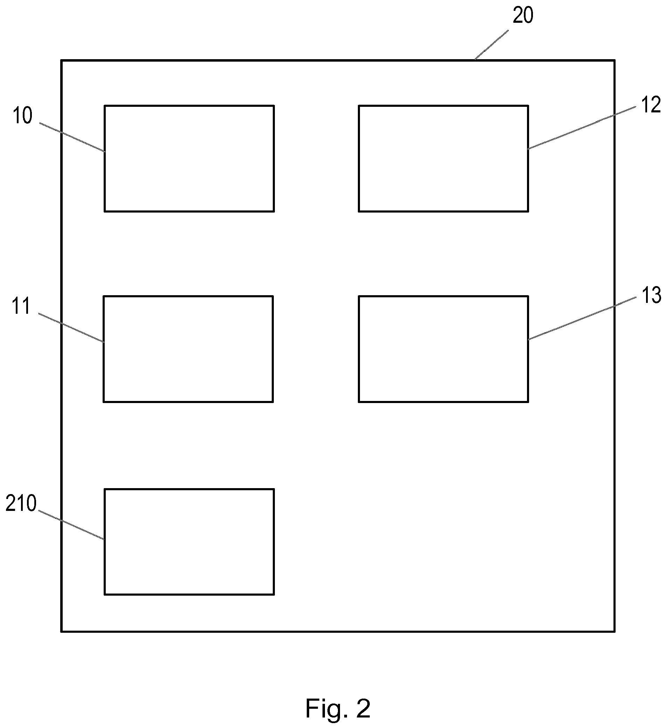

Fig. 2 shows a block diagram of a system 20 comprising a plurality of apparatuses 10, 11, 12, 13 and a main control unit 210.

In the embodiment shown in Fig. 2, there is provided a first apparatus 10 which is the same apparatus as described with reference to Fig. 1, a second apparatus 11, a third apparatus 12, a fourth apparatus 13, and a main control unit 210 in the system 20. Each of the second, third, and fourth apparatuses 11, 12, 13 may be the same or similar to the apparatus 10 described with respect of Fig. 1. Specifically, each of the second, third, and fourth apparatuses 11, 12, 13 comprises a load sensor and an electronic unit, wherein the electronic unit comprises a temperature sensor and a processor, and each of the processors of the apparatuses is configured to determine a respective compensated output signal.

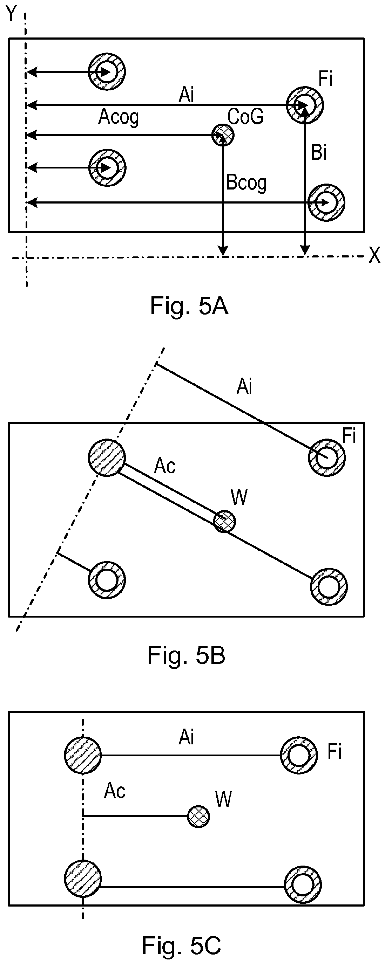

Each of the first apparatus 10, the second apparatus 11, the third apparatus 12, and the fourth apparatus 13 may be integrated at a respective predetermined position such that the main control unit 210 is configured to determine a center of gravity of the system 20 based on the received compensated output signals from two or more of the plurality of apparatuses and the predetermined positions of the plurality of apparatuses. Specifically, in some embodiments, the load sensor at each of the plurality of apparatuses 10, 11, 12, and 13 may be configured to measure the vertical force acting on the apparatuses 10, 11, 12 and 13 and output a compensated output signal indicative of the vertical force. These compensated signals may then be summed by the main control unit 210 so as to determine at least one of: a load on the system 20, the center of gravity of the system 20, or a change in center of gravity of the system 20. This will be explained in more detail below with respect to Fig. 5A, Fig. 5B, and Fig. 5C.

In some embodiments, the main control unit 210 may be configured to as to determine a load on the system 20 based on compensated signals from the plurality of apparatuses in the system 20 and a known original center of gravity of the system 20. Since the signals from each of the plurality of apparatuses 10, 11, 12, 13 are compensated with respect to respective measured temperatures, there is no need for any additional electronics or data manipulations to be performed on the compensated signals before being processed by the main control unit 210.

As an example, the system 20 may be implemented in a cooking device such as an air fryer comprising a removable drawer and a base unit with four feet. In this case, each of the first apparatus 10, the second apparatus 11, the third apparatus 12, and the fourth apparatus 13 may be integrated at a respective foot of the base unit of the air fryer. Accordingly, since the positions of each of four apparatuses at each foot is known, the main control unit 210 can determine the center of gravity of the system 20 and hence the center of gravity of the air fryer based on the compensated output signals from the four apparatuses and the known positions of the four apparatuses 10, 11, 12, 13. Based on this, the main control unit 210 can also determine a change in status of the air fryer based on a change of center of gravity of the system 20. This change in status of the air fryer may be determined based on a predetermined reference table. In this example, if the center of gravity of the air fryer moves towards a predetermined direction for more than a predetermined distance from an original position, then it is determined that the drawer has been removed by a user. It will be appreciated that the same principles can be applied to other devices to determine a change in status of the device, such as a change in orientation of a lid of a rice cooker (i.e. whether it is opened or closed).

As each of the plurality of apparatuses 10, 11, 12, 13 in the system 20 provides a separate compensated output signal to be processed by the main control unit 210, the number of apparatuses in the system 20 and their respective positions in the system 20 (e.g. when integrated in a household appliance) can be varied in a straightforward manner. This allows a higher degree of freedom of design and configuration of the device into which the system 20 is integrated as the design only needs to factor into mechanical considerations rather than electrical considerations.

It will be appreciated that Fig. 2 only shows the components required to illustrated this aspect of the system and, in a practical implementation, the system 20 and the apparatuses 10, 11, 12, 13 may comprise additional components to those shown. For example, the system 20 may comprise a battery or other power supply for powering the system (e.g. the main control unit 210) or means for connecting the system 20 to a mains power supply. Also, as indicated above, the system 20 in other embodiments may comprise fewer or more apparatuses.

In some embodiments, there is provided a cooking device comprising the system 20 as described in an embodiment above. In these embodiments, the main control unit 210 may be configured to determine a change in status of the cooking device based on a change of center of gravity of the system

Fig. 3A and Fig. 3B are respectively a top view and a side view of an apparatus 14 for determining a force applied thereto, according to an embodiment.

With reference to Fig. 3A, the apparatus 14 comprises a carrier having a first portion 144a, a second portion 144b, and a third portion 144c. In some embodiments, the carrier may be made of metal. However, in other embodiments the carrier may be made of other suitable materials, such as ceramics, concrete, semiconductor material (e.g. crystalline silicon), and plastic (e.g. engineering thermoplastics like polyoxymethylene). Typically, the carrier may be made of material that is mechanically elastic over the range of strains it is used or loaded.

In this embodiment, a load sensor comprising a flexible printed circuit substrate 142, a first strain gauge 143a, and a second strain gauge 143b is provided on the third portion 144c of the carrier. The flexible printed circuit substrate 142 is fixedly attached to the carrier. An electronic unit 141 is also provided on the flexible printed circuit substrate 142 at the first portion 144a of the carrier.

The first strain gauge 143a and the second strain gauge 143b of the load sensor are calibrated such that the two strain gauges can be used accurately and reproducibly to measure force applied to the load sensor and therefore force applied to the apparatus 14. When a force is applied to the apparatus 14, the force is mainly acting on the first portion 144a of the carrier which is counteracted by the second portion 144b of the carrier. The third portion 144c deforms due to the applied force and thereby causing a strain in that portion to be measured by the first strain gauge 143a and the second strain gauge 143b. In operation, the electrical signals output by the first strain gauge 143a and the second strain gauge 143b can be combined electronically by a processor in the electronic unit 141 so as to obtain a measure of the force applied to the apparatus 14.

The electronic unit 141, the first strain gauge 143a, and the second strain gauge 143b in this embodiment are all fixedly attached to the flexible printed circuit substrate 142 such that the electronic unit 141 is directly adjacent to the load sensor, as can be seen in Fig. 3A and Fig. 3B. Since the electronic unit 141 is attached to the flexible printed circuit substrate of the load sensor and therefore is directly adjacent to the load sensor, a compact assembly of the apparatus 14 can be achieved, which allows a high freedom of design when the apparatus 14 is implemented in a system and/or a device (e.g. a household appliance). Furthermore, in this configuration, no additional printed circuit substrate and/or casing are required in order to accommodate the electronic unit 141 thus saving manufacturing costs.

Although in this embodiment two strain gauges are used in the load sensor, in other embodiments, the load sensor may comprise fewer or more strain gauges, depending on a number of factors such as dimensions of the apparatus 14 as well as operating temperature range of the apparatus 14.

Furthermore, in this embodiment, a first additional electronic component 146 and a second additional electronic component 147 are provided adjacent to the electronic unit 141, both of which are also provided on the flexible printed circuit substrate 142. In some embodiments, at least one of the first and second additional electronic components 146, 147 may be configured to reduce noise factors originating from the circuitry around the electronic unit 141 (e.g. from the bond wires 145), such as capacitive misbalance or electromagnetic fields. For example, in some embodiments at least one of the first additional electronic component 146 and the second additional electronic component 147 may be a resistor, a capacitor, an inductor, or a ferrite bead. At least one of these additional electronic components may be configured to create specific filtering (e.g. against coupling in of electromagnetic fields from the surrounding environment, or adjustment of the impedance of the different inputs and outputs of the electronic unit 141 to safeguard its correct function).

In some embodiments, at least one of the first additional electronic component 146 and the second additional electronic component 147 may be a converting unit configured to digitize the electrical signal from the load sensor. Therefore, although in some embodiments as described above the conversion functionality maybe integrated in the electronic unit 141, in some other embodiments the conversion functionality may be carried out by an additional component positioned adjacent to the electronic unit 141. Also, in some embodiments, at least one of the first additional electronic component 146 and the second additional electronic component 147 may be a capacitor configured to perform filtering and/or decoupling operations.

There is further provided a cable 150 connected to a plug 151 which allow power to be supplied to the electronic unit 141. Additionally or alternatively, the cable 150 may serve as a communication interface of the apparatus 14 (e.g. to communicate with a main control unit). The cable 150 may be provided in a flat ribbon form so as to minimize space required to accommodate the apparatus 14.

As shown in Fig. 3A, bond wires 145 are provided so as to provide electrical connection between the electronic unit 141 and the first and second strain gauges 143a, 143b, between the electronic unit 141 and each of the first and second additional electronic components 146, 147, and between the electronic unit 141 and the cable 150. Due to the proximity between all these components, only relatively short bond wires are required, which minimizes the amount of noise caused by the electrical circuitry.

Moreover, as shown in Fig. 3A and Fig. 3B, a first protective layer 148 is provided over the electronic unit 141 and the bond wires 145. Also, a second protective layer 149 is provided over the first strain gauge 143a, the second strain gauge 143b, and also over the first protective layer 148 such that it is also over the electronic unit 141. The first protective layer 148 and the second protective layer 149 may be made of molding made of silicone, epoxy resin, or other types of plastic, so as to protect the components as well as the connection (e.g. bond wires) between the components. In other embodiments, the first protective layer 148 and the second protective layer 149 may be combined to form a single protective layer. It will be appreciated, however, in other embodiments the apparatus 14 may not comprise any protective layers.

It will be appreciated that Fig. 3A and Fig. 3B only show the components required to illustrate an aspect of the apparatus 14, and in a practical implementation, the apparatus 14 may comprise alternative or additional components to those shown.

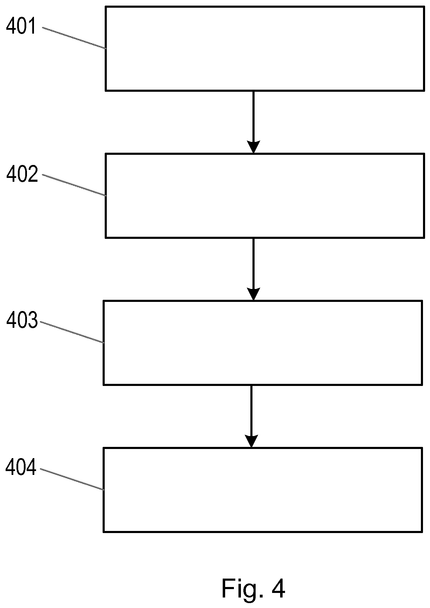

Fig. 4 illustrates an exemplary method of determining a force applied to an apparatus according to an embodiment. In some embodiments, the method may be a computer-implemented method. It will be appreciated in some embodiments the apparatus 10 can comprise computer program code for enabling the illustrated to be performed.

In the first step 401, the force applied to the apparatus 10 is measured via the load sensor 110, and in the second step 402, an electrical signal indicative of the measured force is output via the load sensor 110. In some embodiments, the load sensor 110 may be a strain gauge load sensor comprising one or more strain gauges and these strain gauges respond to an applied force by producing an electrical signal that varies in magnitude with the extent of the deformation of the strain gauge.

In the third step 403, a temperature of the load sensor is measured via the temperature sensor 122 of the electronic unit 120. Due to the proximity between the temperature sensor 122 of the load sensor 110, errors caused by a difference in temperature between the load sensor 110 and the temperature measured by the temperature sensor 122 is minimized. In some embodiments, the temperature of the load sensor 110 may be measured by compensating for errors caused by ambient temperature.

In the fourth step 404, a compensated output signal is determined, via the processor 124, based on the measured temperature and the electrical signal. Specifically, in the fourth step 404, the processor 124 may perform correction/compensation processing on the electrical signal from the load sensor 110 so as to eliminate errors caused by a change in temperature, based on the measured temperature from the third step 403.

Although not illustrated in the flow chart of Fig. 4, in some embodiments the method may further comprise digitizing the electrical signal from the load sensor 110. Specifically, in these embodiments, the digitizing may be performed via a converting unit integrated in the electronic unit 120 of the apparatus 10 to convert analog signals to digital signals before the fourth step 404 when the compensated output signal is determined. As mentioned above with reference to Fig. 1, since the electronic unit 120 is adjacent to the load sensor 110, errors caused by noise in the circuitry is minimized. In these embodiments, in the fourth step 404 the compensated output signal may be determined based on the digitized signal from the converting unit and a force-temperature-calibration curve associated with the load sensor. It will be appreciated that although it is described in embodiments above that the force-temperature-calibration may be used for a strain gauge load sensor, in other embodiments where other types of load sensors (e.g., capacitive load sensor) are used, force-temperature-calibration curve(s) associated with those types of load sensors may be used for determining the compensated output signal.

Fig. 5A is a schematic diagram illustrating how a center of gravity in a system comprising four apparatuses can be determined. Fig. 5B is a schematic diagram illustrating how a load (or weight) applied to a system comprising three apparatuses can be determined. Fig. 5C is a schematic diagram illustrating a how a load (or weight) applied to a system comprising two apparatuses can be determined.

Referring to Fig. 5A, there is provided a system according to an exemplary embodiment comprising four apparatuses, wherein the output compensated signal provided by each of the four apparatuses is represented by a point $F_i$ in a Cartesian coordinate system, i.e. the signal from the first apparatus being represented by point $F_1$, the signal from the second apparatus being represented by point $F_2$, the signal from the third apparatus being represented by point $F_3$, and the signal from the fourth apparatus being represented by point $F_4$. An example of an implementation of such system may be a cooking appliance comprising a base unit having four feet, each foot being integrated with an apparatus for determining a force applied thereto as described in relation to Fig. 1.

In this case, the center of gravity (CoG) is not known and can be determined in terms of Cartesian coordinates against the x-axis and the y-axis by means of the total weight (W), i.e. the sum of all the compensated signals $F_i$ and the respective moments of the four apparatuses $\left( \sum_{i=1}^{4} A_i F_i, \ \sum_{i=1}^{4} B_i F_i \right)$, wherein $A_i$ represents the x-coordinate of the respective moment and $B_i$ represents the y-coordinate of the respective moment. In more detail, the x-coordinate

$A_{CoG}$ of the center of gravity in the system and the y-coordinate $B_{CoG}$ of the center of gravity in the system can be obtained using the formula below:

$$A_{cog} = \left(\sum\nolimits_{i=1}^{4} A_i F_i\right)/W, \; B_{cog} = \left(\sum\nolimits_{i=1}^{4} B_i F_i\right)/W, \text{ with } W = \sum\nolimits_{i=1}^{4} F_i$$

Referring to Fig. 5B, there is provided a system comprising another exemplary embodiment comprising three apparatuses, wherein the center of gravity (CoG) about a given axis of the system is known, and the output compensated signal provided by each of the three apparatuses in the system is represented by a point $F_i$, i.e. the signal from the first apparatus being represented by point $F_1$, the signal from the second apparatus being represented by point $F_2$, and the signal from the third apparatus being represented by point $F_3$. An example of an implementation of such system may be a cooking appliance comprising a base unit having four feet, and only three of the four feet of the base unit are each integrated with an apparatus for determining a force applied thereto as described in relation to Fig. 1.

In this case, the weight (W) applied to the system can be determined based on the output compensated signal from each of the three apparatuses and their sum of moments about the given axis using the formula below, wherein $A_i$ represents the respective distance of each of the three apparatuses from the given axis and $A_c$ represents the distance of the center of gravity from the given axis (a high accuracy of the weight determined can be achieved when the given axis is perpendicular to a line connecting the foot not integrated with an apparatus and the known center of gravity):

$$W = \left(\sum_{i=1}^{3} A_i F_i\right)\Big/ A_c$$

Referring to Fig. 5C, there is provided a system comprising another exemplary embodiment comprising two apparatuses, wherein the center of gravity (CoG) along a given axis of the system is known, and the output compensated signal provided by each of the two apparatuses in the system is represented by a point $F_i$, i.e. the signal from the first apparatus being represented by point $F_1$, and the signal from the second apparatus being represented by point $F_2$. An example of an implementation of such system may be a cooking appliance comprising a base unit having two feet, each foot being integrated with an apparatus for determining a force applied thereto as described in relation to Fig. 1.

In this case, the weight (W) applied to the system can be determined based on the output compensated signal from each of the two apparatuses and their sum of moments about the given axis using the formula below, wherein $A_i$ represents the respective distance of each of the two apparatuses from the given axis and $A_c$ represents the distance of the center of gravity from the given axis:

$$W = \left(\sum_{i=1}^{2} A_i F_i\right)\Big/ A_c$$

There is thus provided an improved apparatus for determining a force applied thereto and a method of operating the same, which overcomes the existing problems. Specifically, in some embodiments, there is provided a method of determining a force applied to the apparatus 10. The method may comprise measuring, via the load sensor, the force applied to the apparatus; outputting, via the load sensor, an electrical signal indicative of the force; measuring, via a temperature sensor in the electronic unit, a temperature of the load sensor; and determining, via a processor in the electronic unit, a compensated output signal based on the measured temperature and the electrical signal.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file

EP 3 499 204 A1

may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that maybe linked statically or dynamically.

The carrier of a computer program may be any entity or device capable of carrying the program. For example, the carrier of the computer program may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1.  An apparatus (10) for determining a force applied thereto, the apparatus comprising:

    a load sensor (110) configured to measure the force and output an electrical signal indicative of the force, and an electronic unit (120) adjacent to the load sensor, wherein electronic unit comprises:

    a temperature sensor (122) configured to measure a temperature of the load sensor; and
    a processor (124) configured to determine a compensated output signal based on the measured temperature and the electrical signal.

2.  An apparatus (10) according to claim 1, wherein the electronic unit (120) is attached to the load sensor (110).

3.  An apparatus (10) according to claim 1 or claim 2, wherein the load sensor (110) comprises a flexible printed circuit substrate (142), and the electronic unit (120) is fixedly attached to the flexible printed circuit substrate.

4.  An apparatus (10) according to claim 3, wherein the flexible printed circuit substrate (142) of the load sensor (110) comprises a connecting unit, and wherein the flexible printed circuit substrate is elongated so as to allow connection between the connecting unit and a main control unit (210).

5.  An apparatus (10) according to any of the preceding claims, wherein the electronic unit (120) further comprises a converting unit configured to digitize the electrical signal from the load sensor (110).

6.  An apparatus (10) according to claim 5, wherein the load sensor (110) is a strain gauge load sensor, and the processor (124) is configured to determine the compensated output signal based on the digitized electrical signal and a force-temperature-calibration curve associated with the strain gauge load sensor.

7.  A system (20) comprising two or more apparatuses (10) as claimed in any one of claims 1 to 6 and a main control unit (210) configured to receive a respective compensated output signal from each of the two or more apparatuses, wherein each of the apparatuses is integrated at a respective predetermined position such that the main control unit is configured to determine a center of gravity of the system based on the received compensated output signals and the predetermined positions of the two or more apparatuses.

8. A cooking device comprising a system (20) according to claim 7, wherein the main control unit (210) is further configured to determine a change in status of the cooking device based on a change of center of gravity of the system.

9. A method of determining a force applied to an apparatus (10), the apparatus comprising a load sensor (110) and an electronic unit (120) adjacent to the load sensor, the method comprising:

measuring, via the load sensor, the force applied to the apparatus;
outputting, via the load sensor, an electrical signal indicative of the force;
measuring, via a temperature sensor (122) in the electronic unit, a temperature of the load sensor; and
determining, via a processor (124) in the electronic unit, a compensated output signal based on the measured temperature and the electrical signal.

Fig. 1

Fig. 2

Fig. 3A

EP 3 499 204 A1

149  148  151

145  141  146  150

144

Fig. 3B

401 ▭

402 ▭

403 ▭

404 ▭

Fig. 4

Fig. 5A

Fig. 5B

Fig. 5C

**Europäisches Patentamt**
**European Patent Office**
**Office européen des brevets**

# EUROPEAN SEARCH REPORT

Application Number

EP 17 20 7195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 670 479 A1 (METTLER TOLEDO INC [US]) 6 September 1995 (1995-09-06) * the whole document * | 1-9 | INV. G01M1/12 A47J37/00 F24C7/00 G01G1/00 G01L1/14 G01L1/22 |
| A | DE 10 2015 116847 A1 (MIELE & CIE [DE]; UNIVERSITÄT BIELEFELD [DE]) 6 April 2017 (2017-04-06) * abstract * * paragraph [0008] * * figure 1 * | 7,8 | |

TECHNICAL FIELDS SEARCHED (IPC)

G01M
A47J
F24C
G01G
G01L

The present search report has been drawn up for all claims

| Place of search | Date of completion of the search | Examiner |
|---|---|---|
| The Hague | 13 September 2018 | Kister, Clemens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

| | | |
|---|---|---|
| Europäisches Patentamt European Patent Office Office européen des brevets | **LACK OF UNITY OF INVENTION**<br>**SHEET B** | **Application Number**<br>EP 17 20 7195 |

The Search Division considers that the present European patent application does not comply with the requirements of unity of invention and relates to several inventions or groups of inventions, namely:

    1. claims: 1-6, 9

        Invention 1 solves the problem to provide for a force
        measuring apparatus which can structurally better be adapted
        to the device to be monitored,
                            ---

    2. claims: 7, 8

        Invention 2 solves the problem of providing for a sensing
        system of a plurality of sensing apparatuses.
                            ---

## ANNEX TO THE EUROPEAN SEARCH REPORT
## ON EUROPEAN PATENT APPLICATION NO.

EP 17 20 7195

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2018

| Patent document cited in search report | | Publication date | Patent family member(s) | | Publication date |
|---|---|---|---|---|---|
| EP 0670479 | A1 | 06-09-1995 | AU 683329 | B2 | 06-11-1997 |
| | | | BR 9500776 | A | 21-11-1995 |
| | | | CA 2141635 | A1 | 02-09-1995 |
| | | | CN 1111750 | A | 15-11-1995 |
| | | | DE 670479 | T1 | 14-03-1996 |
| | | | DE 69510838 | D1 | 26-08-1999 |
| | | | DE 69510838 | T2 | 10-02-2000 |
| | | | EP 0670479 | A1 | 06-09-1995 |
| | | | ES 2078204 | T1 | 16-12-1995 |
| | | | JP H0835894 | A | 06-02-1996 |
| | | | NZ 270529 | A | 19-12-1997 |
| | | | US 5623128 | A | 22-04-1997 |
| DE 102015116847 A1 | | 06-04-2017 | DE 102015116847 | A1 | 06-04-2017 |
| | | | EP 3359882 | A1 | 15-08-2018 |
| | | | WO 2017060015 | A1 | 13-04-2017 |

EPO FORM P0459

For more details about this annex : see Official Journal of the European Patent Office, No. 12/82